# EUROPEAN PATENT SPECIFICATION

(11) **EP 3 378 615 B1**
(45) Date of publication and mention of the grant of the patent: **25.05.2022**
(21) Application number: 18163478.3
(22) Date of filing: 22.03.2018
(51) Int. Cl.: B26D 3/06, B26D 5/00, B26D 5/06, B25J 19/02

(54) **PROCESS AND APPARATUS FOR SCORING WEAKENING LINES**
VERFAHREN UND VORRICHTUNG ZUM EINSCHNEIDEN VON SCHWÄCHUNGSLINIEN
PROCÉDÉ ET APPAREIL POUR INCISER DES LIGNES D'AFFAIBLISSEMENT

(30) Priority: 23.03.2017 IT 201700031842
(43) Date of publication of application: 26.09.2018
(73) Proprietor: AutomationsRobotic GmbH, 84323 Massing (DE)
(72) Inventor: SCHAFFHAUSER, WALTER EDUARD, 84323 MASSING (DE); STEIGER, ALEXANDER, 84028 LANDSHUT (DE)
(74) Representative: Würmser, Julian

(56) References cited:
- WO-A1-2016/149686
- WO-A2-2011/083102
- DE-A1-102015 217 314

## Description

The present invention relates to a process and an apparatus for scoring weakening lines on flexible materials intended for forming airbag covers.

The invention is preferably applicable in the sector of cutting upholstery materials intended for covering dashboards, doors and elements of a vehicle in which airbag devices are installed.

Airbags are usually coupled to an underlying plastic support and covered (for aesthetic reasons) by an upholstery material of various kinds (e.g. synthetic leather and similar plastic sheets).

The materials normally used include, for example, elastomers based on polyurethane, PVC, thermoplastic elastomers and the like.

For the purpose of allowing the correct opening of the airbag, it is necessary to provide weakening lines in the upholstery material, at which the upholstery is intended to break upon the exit of the airbag membrane; this allows the airbag to be correctly directed towards the passenger to be protected and to comply with the technical opening times.

The weakening lines are made on the upholstery material through scoring (not through cuts) that leave at the scored line itself a specific residual thickness of uncut material, which is less than the total thickness of the upholstery material. Such residual (uncut) thickness has a direct impact on the exit speed and method of the airbag and therefore directly influences the safety of the vehicle; in fact, it is intuitive that a residual thickness that is too high can cause the failed or incorrect exit of the airbag membrane; in the event in which the residual thickness were lower than that established in the design, the damage would - potentially - be even greater; in fact the membrane (encountering lower resistance than the design resistance) would exit at the wrong time, with the risk not only of making the presence of the airbag futile, but also causing serious damage to the passenger.

To have maximum precision in the residual thickness the use of automatic cutting machines is known, for example robots with a high degree of repeatability, that move a cutting tool with respect to a fitting, i.e. a support on which the upholstery material for scoring is to be positioned; the fitting is equipped with devices for securing the upholstery: in a known example, the fitting is a support (variously shaped) provided with a resting surface for the upholstery, to which a plurality of suction conduits lead, connected to a pump or the like. Once positioned on the fitting, the upholstery is securely retained there by suction.

Furthermore, in order to guarantee the correctness of the process, measurement checks of the residual thickness must be performed for every scored line, the results of which checks are then documented in order to certify the correct performance of the scored lines for each upholstery material.

In this sense, recording measurements of residual thicknesses in determined check points through different systems from the robot that performed the scored line are known, in order to guarantee the reliability of the check.

In order to perform these check and verification measurements, different devices have been developed over time: in one example an inductive sensor is used mounted on the cutting tool that measures the distance between the latter and the fitting, to perform a direct measurement of the distance between the cutting tool and the fitting; although it is functional in general, this technique has a limit related to the fact that the fitting must be made so as to be detectable by the inductive sensor. The prior art document WO 2011/083102 A2 discloses a process according to the preamble of claim 1.

All these known solutions, although generally useful and to some extent able to provide measurements of the residual thickness, do however require particularly complex installations and, are affected, in relation to certain aspects, by possible thermal dilations that could occur on the cutting machine.

Another limit is connected with the fact that the measurement devices themselves are virtually subject to errors, which could in turn imply errors in the step of checking the residual thicknesses. For correct understanding, the small size of the errors permitted in the measurement/verification of the residual material thicknesses is kept in consideration, which is usually in the order of tens, if not thousandths, of a millimetre.

The main task of the present invention consists of realising a process and an apparatus for scoring weakening lines on flexible materials intended to form covers of airbags that solves the technical problem set out above, obviates the drawbacks and overcomes the limits of the prior art, allowing a technique to be provided able to perform precise measurements also considering any thermal deformations that could arise in the apparatus during use.

A further object of the invention consists of realising a process and an apparatus for scoring weakening lines on flexible materials intended to form covers of airbags that can provide the widest reliability and safety guarantees during use. Another object of the invention consists of realising a process and an apparatus for scoring weakening lines on flexible materials intended to form covers of airbags that is relatively easy to realise and economically competitive compared with the prior art.

The task set forth above, as well as these and other objects that will appear more clearly below, are reached by a process for scoring the weakening lines of flexible materials intended to form covers of airbags, said process being realised in a scoring apparatus that comprises: a machine frame, a robotic arm carrying a cutting tool, a fitting or support for the flexible material, the process comprising a step of checking the residual thickness not cut by a cutting tool, wherein, according to the invention at least the checking step comprises a step of spatial detection of the three-dimensional positions and of the orientation of at least: the machine frame, the robotic arm, the cutting tool, the fitting or support, which step is performed by means of optical marking devices associated with the machine frame, the robotic arm, the cutting tool and the fitting or support, respectively, and wherein at least the following steps are envisaged:
a. detecting the spatial position of said optical marking devices by means of at least one vision device,
b. reconstructing based on the spatial position detected in step a. the three-dimensional positions and the orientation of the machine frame, of the robotic arm, of the cutting tool and of the fitting or support during a cutting step.

In line with the process according to the invention, further subject matter of the latter is an apparatus for scoring weakening lines on flexible materials intended to form airbag covers, comprising:
a machine frame,
a robotic arm mounted on the frame,
a cutting tool mounted on the robotic arm,
wherein the apparatus further comprises a first fitting or support (5) for the flexible material mounted on the frame (2), optical marking devices associated with the machine frame, the robotic arm, the cutting tool and the fitting or support, respectively, and a vision device to detect a spatial position of said optical marking devices.

Thus it is possible to achieve the objects identified above, as the invention makes it possible to verify that the residual thickness of the uncut material is consistent with the design choices.

Furthermore, as will be seen in detail below, the invention provides self-diagnosis steps that allow the correctness of the measurements performed to be checked.

Additional features and advantages will become more apparent from the description of a preferred, but non-exclusive embodiment of an apparatus that realises the process of the invention, illustrated by way of non-limiting example with the aid of the appended drawings, in which:

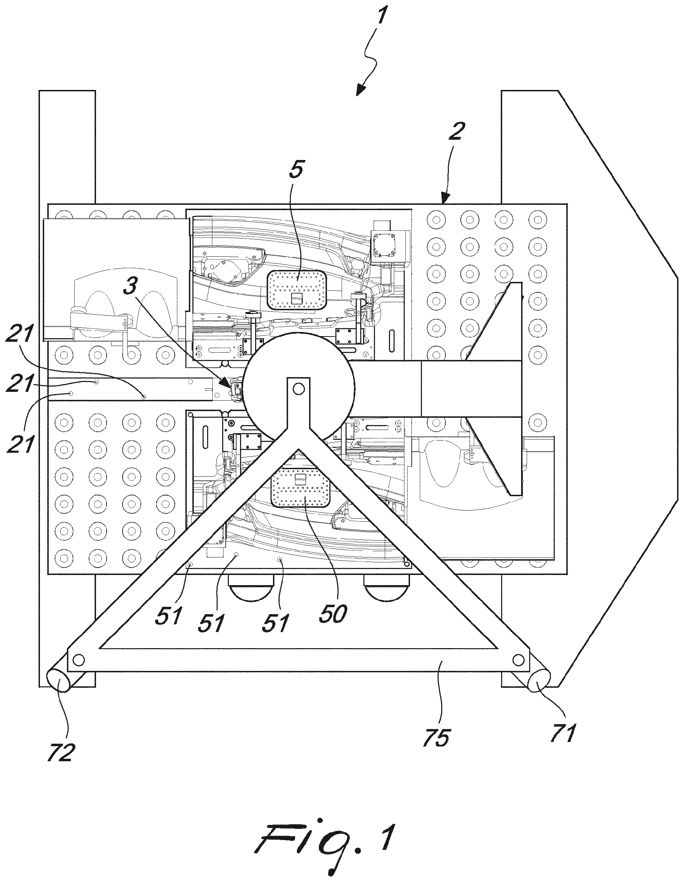

figure 1 is a plan view from above of an embodiment of an apparatus according to the invention;

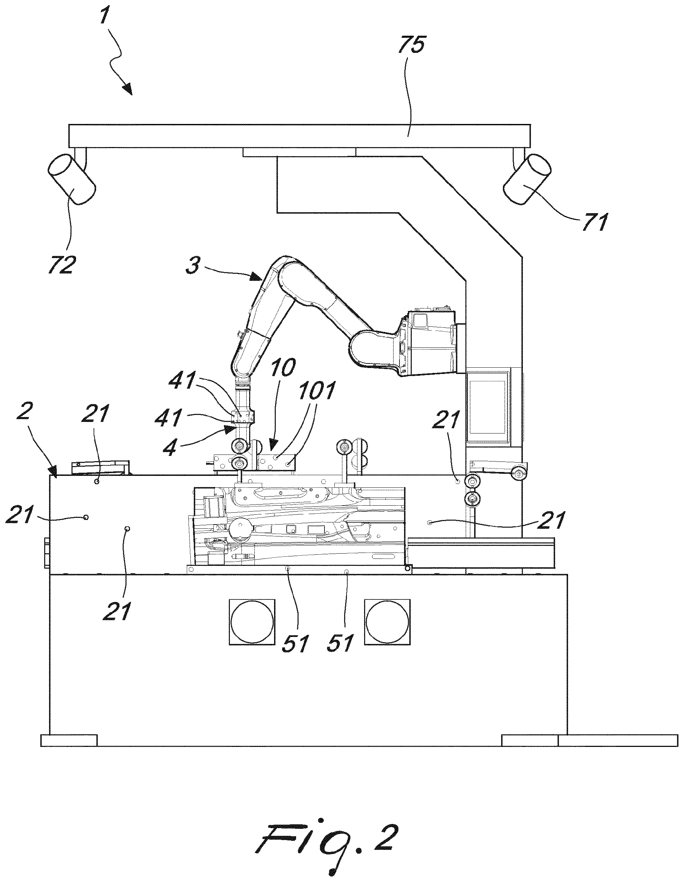

figure 2 shows a lateral view of the apparatus of fig. 1;

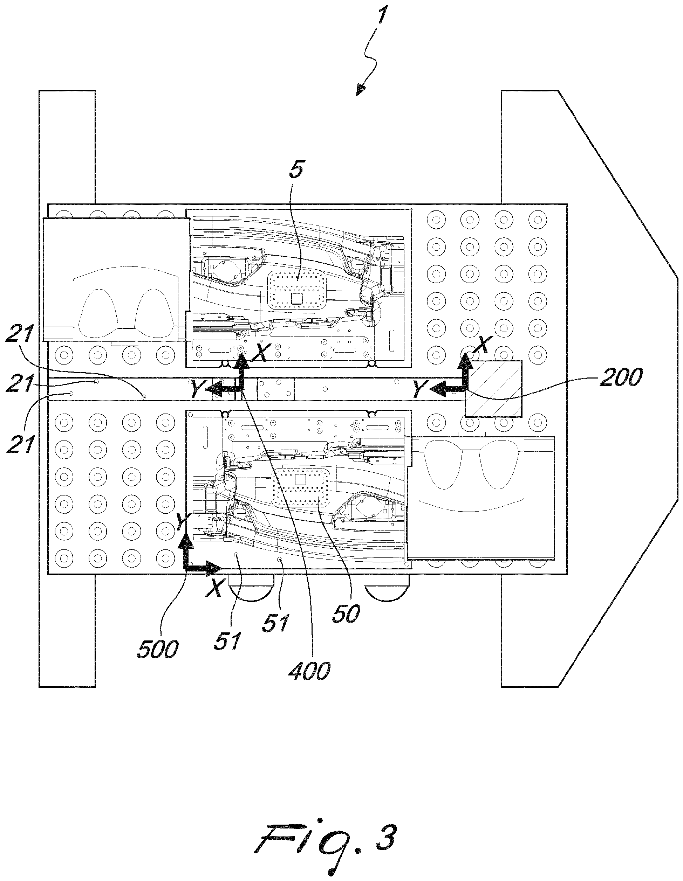

figure 3 is a plan view from above of the apparatus of fig. 1 with some parts removed for better legibility;

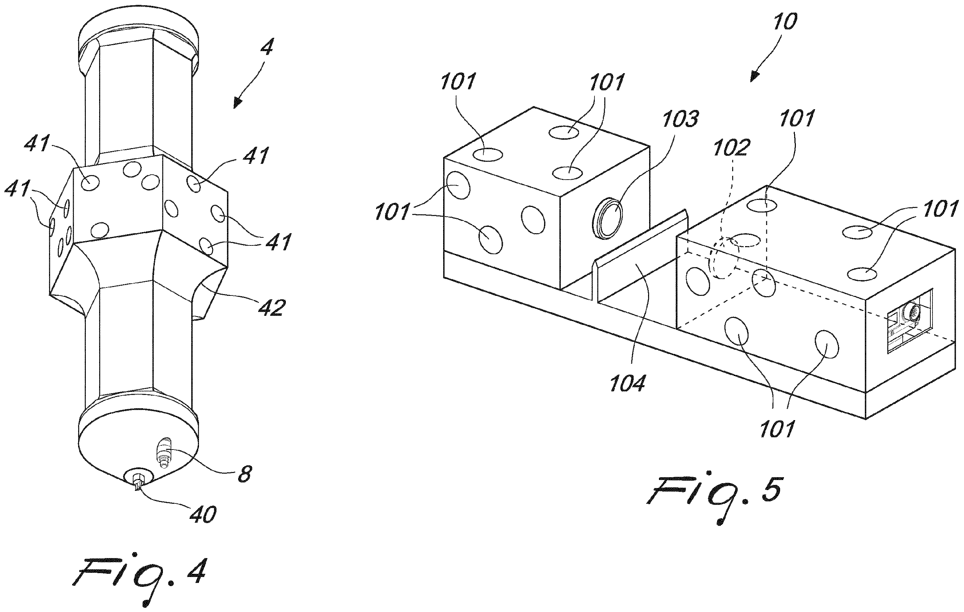

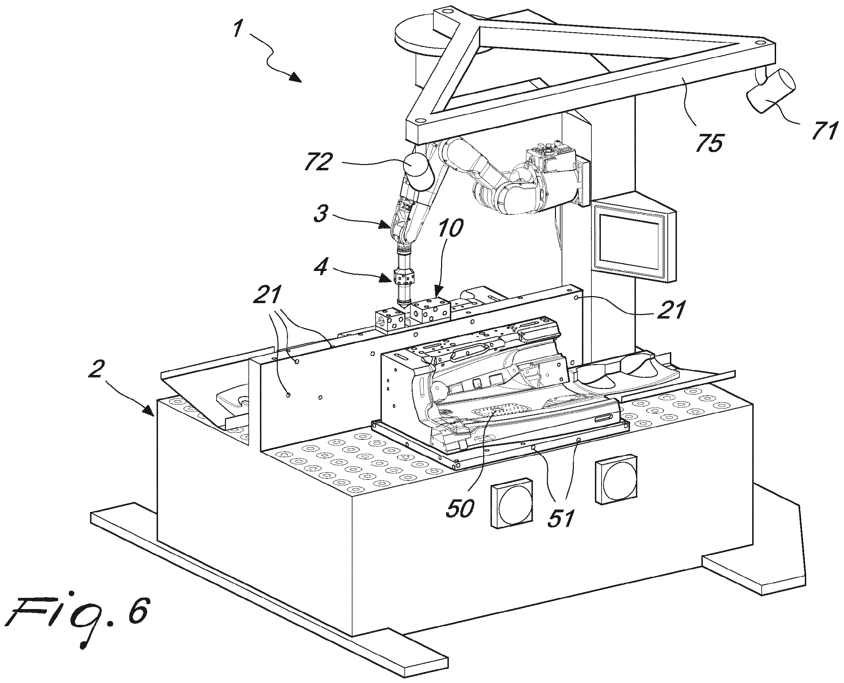

figure 4 is a lateral view of a cutting tool mounted on a robotic arm of the apparatus of fig. 1;
figure 5 is a lateral view of a vision system mounted on the apparatus of fig. 1.

Before describing the process according to the invention, for clarity purposes, it is worth describing the apparatus 1 in its non-limiting embodiment of the appended figures.

The scoring apparatus 1, in general, is intended to perform the weakening lines on flexible materials intended to form airbag covers such as, for example, materials that once assembled constitute the cover of dashboards, doors and the like, in the zones in which an airbag is envisaged.

The apparatus 1 comprises a machine frame 2 on which a robotic arm 3 is mounted and at least a first fitting or support 5 for the flexible material mounted on the frame 2.

In the embodiment of the appended figures, an evolved form of the apparatus 1 is illustrated, which also has a second fitting or support 50, also mounted on the same machine frame 2; in a basic form - not illustrated - a single fitting 5 is instead envisaged; in other more evolved forms - not illustrated - three, four or more are envisaged.

The robotic arm 3 is preferably of the industrial type, e.g. of the type with good repeatability, preferably equal to about 0.025 mm.

A cutting tool 4 is supported on such arm 3, comprising a cutting edge 40 and a support for the cutting edge 42.

The cutting edge 40 projects from the support 42 for a certain length measured in the longitudinal extension direction of the cutting edge 40 itself and in the cutting step it penetrates for a certain length into the thickness of the flexible material, generating the scored line that will constitute the weakening line at which the material will break upon the exit of the airbag balloon.

In accordance with the invention the apparatus 1 comprises optical marking devices 21,41,51 associated with the machine frame 2, the cutting tool 4 and the fitting or support 5, respectively.

The optical marking devices 21,41,51 are coupled in precise and known points regardless of the respective elements 2,4 and 5.

In this way, with reference to the frame 2, for example, by detecting at least three marker devices 21, it is possible to reconstruct not only the position but also the orientation of the frame 2 itself and, therefore, of a set 200 of three Cartesian axes associated with the frame. The same can be said, in short, also for the other marking devices 41 and 51 and the respective elements 4, 5 of the apparatus 1 for which respective sets of three axes 400 and 500 are reconstructed.

The marking devices 21, 41 and 51, possibly even of the same type, are different from each other, so that it is possible to distinguish the marking devices 21 of the frame 2, from those 41 of the tool 4, from those 51 of the fitting 5; it is further preferably possible within the marking groups 21, 41 and 51, to distinguish one marker from another, so that each marker 21,41,51 is uniquely identified and identifiable.

In the appended figures, the markers 21, 41, 51 are arranged in a completely indicative and non-limiting way.

The detection of the spatial position of the markers 21 can be performed thanks to a vision device 7, which, in the example, comprises two TV cameras 71,72 also mounted on the frame 2 by means of a movable counter-frame 75 which will be discussed below; for now, it is sufficient to note that in simpler forms of the apparatus 1 only one TV camera 71 is provided, possibly also mounted directly on the frame 2.

In practice, the vision device 7 detects the position of the marking devices 21, 41, 51 and, through image analysis algorithms of the known type, it is able to reconstruct the spatial position and orientation of the elements 2, 4 and 5 and/or of the sets of three Cartesian axes 200, 400, 500 associated with the frame 2, with the tool 4 and with the fitting 5, by relating the respective positions/orientations to a single and unique reference system.

An evolved form of the apparatus 1 also comprises a feeler device 8 mounted on the cutting tool 4, preferably on said support for the cutting edge 42.

The feeler device 8 measures the distance in contact and comprises a body from which an extensible and retractable arm 81 projects, whose length in extension from the body is measured.

Preferably the body of the feeler is connected or constituted by the support 42 of the tool 4; the arm 81 extends parallel to the cutting edge 41 and is therefore able to measure the distance between the support 42 and a reference, e.g. the fitting 5, also in the dynamic condition, i.e. when the tool moves with respect to the fitting 5,50.

In the preferred and illustrated embodiment, the apparatus 1 also comprises a two-dimensional vision system 10 with telecentric optics for measuring a cutting edge 40 of the cutting tool 4.

Such two-dimensional vision system 10 is positioned in a resting area of the tool 4, where the latter is brought by the arm 3 after scoring a line.

The two-dimensional vision system 10 aims to verify the status of the cutting edge 40, preferably its integrity; it is thus possible to measure any changes to the shape/size of the cutting edge 40 that could imply its replacement and/or a correction of the measurements performed.

Preferably, also the two-dimensional vision system 10 is equipped with marking devices 101, analogous to the devices 21, 41 and 51 and with the same function, which will not be described further.

The two-dimensional vision system 10 further comprises a TV camera 102, an illuminator 103 facing the TV camera 102 and an abutment 104 for resting the feeler 8, the latter interposed between the TV camera 102 and the illuminator 103 and useful to constitute a reference for resting the feeler 8 and verifying the calibration.

Returning to the preferred embodiment of the apparatus 1 comprising two fittings or supports 5, 50 for the flexible material, the vision device 7 is mounted movable on the frame between a first position in which it frames at least the first fitting or support 5 and a second position in which it frames at least the second fitting or support 5; in this case the vision device 7 is mounted on a counter-frame 75 that moves with respect to the frame 2 at least according to an axis of rotation, so as to be brought into the two aforementioned positions. Although this configuration is shown in the figures with reference to the case of two TV cameras 71, 72 it is meant that - in a completely equivalent way - only one could also be provided.

In relation to the fitting 5, 50 it has a variable shape according to the part of the vehicle that must be shaped and comprises a device for retaining the flexible material, e.g. a depression retaining device of the known type which will not be described further.

Now moving on to the description of the process through scoring weakening lines on flexible materials intended to form airbag covers, it is preferably realised in an apparatus 1 of the type described above.

The process comprises a step of checking the residual thickness not cut by the cutting device, which is repeated for every individual line scored on a flexible material, so as to allow 100% control of the items produced.

The process according to the invention comprises, in detail, a spatial detection step of the three-dimensional positions and the orientation at least of the machine frame 2, of the cutting tool 4 and of the fitting or support 5.

It is worth noting that the aforementioned spatial detection of the three-dimensional positions and orientation of the elements 2,4,5 could give rise to the identification, for each element, of a set of three Cartesian axes, whose position and orientation is established, for each one with reference to a set of three reference axes, which could coincide with the set of three axes, for example, of the frame 2.

Such spatial detection is performed by means of the aforementioned optical marking devices 21,41,51 associated with the machine frame, the cutting tool and the fitting or support, respectively.

The process envisages - for that purpose - at least the steps of:
a. detecting the spatial position of said optical marking devices 21,41,51 by means of at least one vision device 7.
b. reconstructing based on the spatial position detected in step a. the three-dimensional positions and the orientation of the machine frame 2, of the cutting tool 4 and of the fitting or support 5 during a scoring step.

It is thus possible to monitor the correct scoring of the line, because knowledge of these magnitudes allows the position of the various parts with respect to each other to be precisely established.

Theoretically it may be sufficient to detect only the relative spatial position between the tool 4 and the fitting 5, however, the solution described herein is particularly advantageous, as it allows any deformations (e.g. thermal deformations) that have occurred to be detected and measured and the references to be provided that can be detected and recognised from both TV cameras (if, in fact, two are provided) and used for assessing the quality of the measurements. The process of the invention then envisages the following step:
c. comparing the three-dimensional positions and the orientation of the machine frame 2, of the cutting tool 4 and of the fitting or support 5 reconstructed in step b. with respective known reference three-dimensional positions and orientation, of the machine frame 2, of the cutting tool 4 and of the fitting or support 5, identifying and measuring deviations between analogous positions or orientations of machine frame 2, the cutting tool 4 and the fitting or support 5.

It is to be noted that the comparison between the three-dimensional positions and orientation detected during scoring and the known reference ones could also be performed by comparing the set of three axes associated with the elements 2,4,5 measured in the scoring step with analogous known reference sets.

In relation to the known reference three-dimensional positions and orientation (or equivalently the reference sets of axes), they were detected during scoring a line, the correctness of which was verified through a destructive test on the material, adapted to measure the residual thickness of uncut material on a reference sample. Such reference three-dimensional positions and orientation (or equivalently the reference sets) were memorised in a previous step to the working step and are, in fact, used as a comparison for each subsequent scoring operation.

In substance, during a scoring operation the apparatus 1 measures the three-dimensional positions and orientation (or equivalently the sets of three axes) that are followed by the various elements 2, 4 and 5 during the working step itself and then compares the measured values with the known reference ones to identify deviations from analogous values. This definition intends to indicate that the deviations are identified relative to homologous magnitudes e.g. the measured position and orientation of the set of three axes of the frame 2 with the known position and orientation of the actual set of three axes of the fitting 5.

In step d. such deviations are then compared with threshold deviation values and:
e. if all the measured deviations are lower than the pre-set threshold values, a passed test report is generated.

Alternatively, or in combination, step d' is envisaged, which comprises recording (e.g. in a file on a memory device and/or in paper form) the value of each deviation and uniquely associating it with the material that has been scored, such that each airbag cover thus obtained is accompanied by a report indicating at least the deviations between the measurements made and the reference ones.

In this way, through a precise comparison with a scored line whose correctness has been verified, it is possible to have sufficient information to verify whether the line just scored is to be considered successful or not, and the scored material can be used or must be rejected.

Furthermore, in this way, it is also possible to check which deviation or deviations are out of tolerance and - possibly - take consequent action for subsequent scored lines with appropriate corrective operations.

Preferably, prior to step a. a preliminary calibration step is performed comprising the steps of:
a0. moving the cutting tool 4 with respect to said fitting or support 5 simulating a scoring step, in the absence of flexible material on the fitting or support 5,
a1. during the movement a0. measuring by means of a feeler device 8 associated with the cutting tool 4 a distance detected between the fitting or support 5 and the cutting tool 4,
a2. during the movement a0. detecting the spatial position of optical marking devices 41,51 associated with the cutting tool 4 and the fitting or support 5 by means of at least one vision device 7 and measuring an inferred distance between the fitting or support 5 and the cutting tool 4, said measurement of the inferred distance being made by comparing at least the spatial positions of the cutting tool 4 and of the fitting or support 5 reconstructed based on the spatial position detected by said optical marking devices 41,51;
a3. comparing the distance detected in step a1. with the inferred distance measured in step a2.

Such comparison makes it possible to verify that the spatial geometry of the fitting 5, at least along the scored line, corresponds to the geometry with which the fitting 5 was made. This calibration steps is particularly interesting as it makes it possible to set a scoring path whose points are all at an equal distance from the fitting itself.

According to an advantageous characteristic, the process further comprises a step f. of measuring a cutting edge 40 of the cutting tool 4 obtained by means of a two-dimensional vision system with telecentric optics 10.

In fact, the worn cutting edges 40 in use are replaced by corresponding new cutting edges 40; although the dimensions of the cutting edges should theoretically be the same between one cutting edge and another, it can happen that - because of the construction method - they have different dimensions; if this happens, this situation implies errors in the measurement of the depth of the scored line, which could imply an incorrect realisation.

The vision system 10 measures the length of the cutting edge 40 and consequently corrects the total length of the cutting tool in use.

It is to be noted that the system according to the invention measures the position of the support of the cutting edge 42, on which the markers 41 are mounted; if the cutting edge 40 has different dimensions (notably, a longitudinal length) from the design one, despite the performance of a precise scoring path, the consequence would be a scored line with a different depth (greater or smaller according to whether the cutting edge is respectively shorter or longer than a design cutting edge) from the envisaged one.

The functioning is clear and evident from the description.

In practice, it has been noted how the invention described herein and claimed below fulfils the task and the predefined objects as it allows the objects predefined above to be reached.

The invention as it is conceived is susceptible to numerous modifications and variants, all falling within the scope of the inventive concept.

Furthermore, all the details can be replaced by other technically equivalent elements.

In practice, any materials can be used according to requirements, as long as they are compatible with the specific use, the dimensions and the contingent shapes.

## Claims

1. Process for scoring weakening lines on flexible materials intended to form airbag covers, said process being performed in a scoring apparatus (1), which comprises: a machine frame (2), a robotic arm (3) carrying a cutting tool (4), a fitting or support (5) for the flexible material, the process comprising a step of checking the residual thickness (S) not cut by a cutting tool,
**characterised in that**
at least the checking step comprises a step of spatial detection of the three-dimensional positions and of the orientation of at least:
the machine frame (2),
the cutting tool (4) and
the fitting or support (5)
performed by means of optical marking devices (21,41,51) associated with the machine frame, the robotic arm, the cutting tool and the fitting or support, respectively,
wherein at least the following steps are provided for:
a. detecting the spatial position of said optical marking devices (21, 41,51) by means of at least one vision device (7)
b. reconstructing based on the spatial position detected in step a. the three-dimensional positions and the orientation of the machine frame (2), of the cutting tool (4) and of the fitting or support (5) during a scoring step.

2. Process according to the preceding claim, **characterised in that** it provides for the step of:
c. comparing the three-dimensional positions and the orientation of the machine frame (2), of the cutting tool (4) and of the fitting or support (5) reconstructed in step b. with respective known reference three-dimensional positions and orientation, of the machine frame (2), of the cutting tool (4) and of the fitting or support (5), identifying and measuring deviations between similar positions or orientations of machine frame (2), of the robotic arm (3), the cutting tool (4) and the fitting or support (5).

3. Process according to claim 2, **characterised in that** it provides for at least one of the steps d. and e. and/or d', defined as follows:
d. comparing the deviations measured in step c. with threshold deviation values,
e. if all the measured deviations are lower than the threshold values, generating a passed test report,
d'. recording the value of each deviation and uniquely associating it with the material that has been scored, such that each airbag cover thus obtained is accompanied by a report indicating at least the deviations between the measurements made and the reference ones.

4. Process according to one or more of the preceding claims, **characterised in that** before step a. a preliminary calibration step is performed comprising the steps of:
a0. moving the cutting tool (4) with respect to said fitting or support (5) simulating a scoring step, in the absence of flexible material on the fitting or support (5),
a1. during the movement a0. measuring by means of a feeler device (8) associated with the cutting tool (4) a distance detected between the fitting or support (5) and the cutting tool (4),
a2. during the movement a0. detecting the spatial position of optical marking devices (41,51) associated with the cutting tool (4) and the fitting or support (5) by means of at least one vision device (7) and measuring an inferred distance between the fitting or support (5) and the cutting tool (4), said measurement of the inferred distance being made by comparing at least the spatial positions of the cutting tool (4) and of the fitting or support (5) reconstructed based on the spatial position detected by said optical marking devices (41,51)
a3. comparing the distance detected in step a1. with the inferred distance measured in step a2.

5. Process according to one or more of the preceding claims, **characterised in that** it comprises a step f. of measuring a cutting edge (40) of the cutting tool (4) obtained by means of a two-dimensional vision system with telecentric optics (10).

6. Apparatus for scoring (1) weakening lines on flexible materials intended to form airbag covers, comprising:
a machine frame (2),
a robotic arm (3) mounted on the frame (2),
a cutting tool (4) mounted on the robotic arm (3),
**characterised in that**
the apparatus (1) further comprises a first fitting or support (5) for the flexible material mounted on the frame (2), optical marking devices (21,41,51) associated with the machine frame (2), the cutting tool (4) and the fitting or support (5), respectively, and a vision device (7) to detect a spatial position of said optical marking devices (21,41,51).

7. Apparatus according to the preceding claim, **characterised in that** the vision device (7) comprises at least one, preferably two cameras (71,72) mounted on the frame (2).

8. Apparatus according to claim 6 or 7, **characterised in that** the cutting tool (4) comprises a cutting edge (40) and a support for the cutting edge (42) and wherein the apparatus (1) comprises a feeler device (8) mounted on the cutting tool (4), preferably on said support for the cutting edge (42).

9. Apparatus of one or more of the claims from 6 to 8, **characterised in that** it comprises a two-dimensional vision system (10) with telecentric optics for measuring a cutting edge (40) of the cutting tool (4).

10. Apparatus of one or more of the claims from 6 to 8, **characterised in that** it further comprises a second fitting or support (50) for the flexible material mounted on the frame (2), said vision device (7) being movably mounted on the frame between one first position in which it frames at least the first fitting or support (5) and one second position in which it frames at least the second fitting or support (5).

## Patentansprüche

1. Verfahren zum Einritzen von Schwächungslinien auf flexiblen Materialien, welche dazu bestimmt sind, Airbag-Abdeckungen zu bilden, wobei das Verfahren in einem Einritz-Apparat (1) durchgeführt wird, welcher umfasst: einen Maschinenrahmen (2), einen Roboterarm (3,der ein Schneidewerkzeug (4) trägt, eine Halterung oder einen Träger (5) für das flexible Material, wobei das Verfahren einen Schritt umfasst, die verbleibende Dicke (S), welche nicht durch das Schneidewerkzeug geschnitten wird, zu prüfen, **dadurch gekennzeichnet, dass**
zumindest der Schritt des Prüfens einen Schritt der räumlichen Detektion der dreidimensionalen Positionen und Orientierung von mindestens:
dem Maschinenrahmen(2),
dem Schneidewerkzeug (4) und
der Halterung oder dem Träger (5) umfasst
durchgeführt durch optische Markierungsvorrichtungen (21,41,51), die mit dem Maschinenrahmen, dem Roboterarm, dem Schneidewerkzeug bzw. der Halterung oder dem Träger assoziiert sind, wobei mindestens folgende Schritte enthalten sind:
a. Detektieren der räumlichen Position der besagten optischen Markierungsvorrichtungen (21,41,51) durch mindestens ein Sichtgerät (7)
b. Rekonstruieren, auf Basis der in Schritt a. detektierten räumlichen Position, der dreidimensionalen Positionen und Orientierung des Maschinenrahmens (2), des Schneidewerkzeuges (4) und der Halterung oder des Trägers (5) während eines Einritz-Schrittes.

2. Verfahren nach dem vorangegangenen Anspruch, **dadurch gekennzeichnet, dass** es den Schritt enthält:
c. Vergleichen der dreidimensionalen Positionen und Orientierung des Maschinenrahmens (2), des Schneidewerkzeuges (4) und der Halterung oder des Trägers (5), welche in Schritt b rekonstruiert wurden, mit entsprechenden bekannten Referenzdreidimensionalen Positionen und Orientierung des Maschinenrahmens (2), des Schneidewerkzeugs (4) und der Halterung oder des Trägers (5), Identifizieren und Messen der Abweichungen zwischen ähnlichen Positionen oder Orientierungen des Maschinenrahmens (2), des Roboterarms (3), des Schneidewerkzeugs (4) und der Halterung oder des Trägers (5).

3. Verfahren gemäß Anspruch 2, **dadurch gekennzeichnet, dass** es mindestens einen der folgenden Schritte d. und e. und/oder d' enthält, welche folgendermaßen definiert sind:
d. Vergleichen der Abweichungen, welche in Schritt c. gemessen wurden, mit Abweichungs-Schwellenwerten
e. Generieren eines Test-bestanden Berichts, wenn alle gemessenen Abweichungen unter den Abweichungs-Schwellenwerten liegen,
d'. Aufzeichnung des Wertes jeder Abweichung, wobei diese eindeutig dem geritzten Material zugeordnet wird so, dass jede so hergestellte Airbag-Abdeckung einen begleitenden Bericht besitzt, welcher zumindest die Abweichungen zwischen den genommenen Messungen und den Referenzen umfasst.

4. Verfahren gemäß einem oder mehreren der vorangegangenen Ansprüche, **dadurch gekennzeichnet, dass** vor Schritt a. ein vorläufiger Kalibrierungsschritt durchgeführt wird, der folgende Schritte umfasst:
a0. Bewegen des Schneidewerkzeugs (4) in Bezug auf die Halterung oder des Trägers (5), zum Simulieren eines Einritzschrittes in Abwesenheit eines flexiblen Materials auf der Halterung oder dem Träger,
a1. Während der Bewegung in aO, Messen mittels eines Fühler-gerätes (8), welches mit dem Schneidewerkzeug (4) assoziiert ist, eines zwischen der Halterung oder dem Träger (5) und dem Schneidewerkzeug (4) detektierten Abstands,
a2. Während der Bewegung in aO, Detektieren der räumlichen Position der optischen Markierungsvorrichtungen (41,51), welche mit dem Schneidewerkzeug (4) assoziiert sind, und der Halterung oder des Trägers (5) mit Hilfe mindestens eines Sichtgeräts (7) und Messung eines abgeleiteten Abstands zwischen der Halterung oder dem Träger (5) und dem Schneidewerkzeug (4), wobei die Messung des abgeleiteten Abstands zumindest durch den Vergleich von der räumlichen Positionen des Schneidewerkzeugs (4) und der Halterung oder des Trägers (5) erfolgt, rekonstruiert auf Basis auf der durch die optischen Markierungsvorrichtungen (41,51) detektierten räumlichen Position.
a3. Vergleichen des in Schritt a1 detektierten Abstands mit dem abgeleiteten, in Schritt a2 gemessenen Abstand.

5. Verfahren gemäß einem oder mehreren der vorangegangenen Ansprüche, **dadurch gekennzeichnet, dass** es einen Schritt f. des Messens einer Schneide (40) des Schneidewerkzeuges (4), durch ein zweidimensionales Sichtsystem mit telezentrierter Optik (10) umfasst.

6. Einritz-Apparat (1) zum Einritzen von Schwächungslinien auf flexiblen Materialien, welche dazu bestimmt sind, Airbag-Abdeckungen zu formen, umfassend:
einen Maschinenrahmen (2),
einen Roboterarm (3) angebracht am Maschinenrahmen (2)
ein Schneidewerkzeug (4) angebracht an dem Roboterarm (3)
**dadurch gekennzeichnet, dass** der Einritz-Aparat (1) weiterhin umfasst: eine auf dem Maschinenrahmen (2) angebrachte, erste Halterung oder Träger (5) für das flexible Material, optische Markierungsvorrichtungen (21,41,51) jeweils assoziiert mit dem Maschinenrahmen (2), dem Schneidegerät (4) und der Halterung oder dem Träger (5), und ein Sichtgerät (7) zur Detektion einer räumlichen Position der optischen Markierungsvorrichtungen (21,41,51).

7. Einritz-Apparat nach dem vorhergehenden Anspruch, **dadurch gekennzeichnet, dass** das Sichtgerät (7) mindestens eine, vorzugsweise zwei Kameras umfasst, welche an dem Maschinenrahmen (2) angebracht sind.

8. Einritz-Apparat nach Anspruch 6 oder 7, **dadurch gekennzeichnet, dass** das Schneidewerkzeug (4) eine Schneide (40) und eine Stütze für die Schneide (42) umfasst, und wobei der Einritz-Apparat (1) ein Fühler-gerät (8) umfasst, welches auf dem Schneidewerkzeug (4), vorzugsweise auf der Stütze für die Schneide (42), angebracht ist.

9. Einritz-Apparat nach einem oder mehreren der Ansprüche 6 bis 8, **dadurch gekennzeichnet, dass** er ein zweidimensionales Sichtsystem (10) mit telezentrierter Optik zum Messen einer Schneide (40) des Schneidewerkzeugs (4) umfasst.

10. Einritz-Apparat nach einem oder mehreren der Ansprüche 6 bis 8, **dadurch gekennzeichnet, dass** er eine zweite Halterung oder Träger (50) für das flexible Material umfasst, angebracht an dem Maschinenrahmen (2), wobei das Sichtgerät (7) auf dem Maschinenrahmen (2) beweglich zwischen einer ersten Position, in der es zumindest die erste Halterung oder Träger (5) einrahmt, und einer zweiten Position, in der es zumindest die zweite Halterung oder Träger (50) einrahmt, angebracht ist.

## Revendications

1. Procédé pour inciser des lignes d'affaiblissement sur des matériaux souples destinés à former des couvercles d'airbag, ledit procédé étant exécuté dans un appareil d'incisage (1) qui comprend : un bâti de machine (2), un bras robotique (3) portant un outil de coupe (4), un raccord ou support (5) pour le matériau souple, le procédé comprenant une étape de vérification de l'épaisseur résiduelle (S) non coupée par un outil de coupe,
**caractérisé en ce**
**qu'**au moins l'étape de vérification comprend une étape de détection spatiale des positions tridimensionnelles et de l'orientation d'au moins :
le bâti de machine (2),
l'outil de coupe (4) et
le raccord ou support (5),
effectuée au moyen de dispositifs de marquage optique (21, 41, 51) associés au bâti de machine, au bras robotique, à l'outil de coupe et au raccord ou support, respectivement,
dans lequel sont prévues au moins les étapes consistant à :
a. détecter la position spatiale desdits dispositifs de marquage optique (21, 41, 51) au moyen d'au moins un dispositif de vision (7),
b. reconstruire, sur la base de la position spatiale détectée à l'étape a., les positions tridimensionnelles et l'orientation du bâti de machine (2), de l'outil de coupe (4) et du raccord ou support (5) pendant une étape d'incisage.

2. Procédé selon la revendication précédente, **caractérisé en ce qu'**il prévoit l'étape consistant à :
c. comparer les positions tridimensionnelles et l'orientation du bâti de machine (2), de l'outil de coupe (4) et du raccord ou support (5) reconstruits à l'étape b. avec des positions tridimensionnelles et une orientation de référence connues respectives du bâti de machine (2), de l'outil de coupe (4) et du raccord ou support (5), identifier et mesurer les écarts entre des positions ou orientations similaires du bâti de machine (2), du bras robotique (3), de l'outil de coupe (4) et du raccord ou support (5).

3. Procédé selon la revendication 2, **caractérisé en ce qu'**il prévoit au moins l'une des étapes d. et e. et/ou d', définies comme suit et consistant à :
d. comparer les écarts mesurés à l'étape c. avec des valeurs seuils d'écart,
e. si tous les écarts mesurés sont inférieurs aux valeurs seuils, générer un rapport d'essai réussi,
d'. enregistrer la valeur de chaque écart et l'associer de manière unique au matériau incisé, de sorte que chaque couvercle d'airbag ainsi obtenu est accompagné d'un rapport indiquant au moins les écarts entre les mesures effectuées et les mesures de référence.

4. Procédé selon l'une ou plusieurs des revendications précédentes, **caractérisé en ce qu'**avant l'étape a., une étape préliminaire d'étalonnage est exécutée, comprenant les étapes consistant à :
a0. déplacer l'outil de coupe (4) par rapport audit raccord ou support (5) en simulant une étape d'incisage, en l'absence de matériau souple sur le raccord ou support (5),
a1. pendant le déplacement aO., mesurer au moyen d'un dispositif de palpage (8) associé à l'outil de coupe (4) une distance détectée entre le raccord ou support (5) et l'outil de coupe (4),
a2. pendant le déplacement aO., détecter la position spatiale de dispositifs de marquage optique (41, 51) associés à l'outil de coupe (4) et au raccord ou support (5) au moyen d'au moins un dispositif de vision (7) et mesurer une distance déduite entre le raccord ou support (5) et l'outil de coupe (4), ladite mesure de la distance déduite étant effectuée en comparant au moins les positions spatiales de l'outil de coupe (4) et du raccord ou support (5) reconstruites sur la base de la position spatiale détectée par lesdits dispositifs de marquage optique (41, 51),
a3. comparer la distance détectée à l'étape a1. avec la distance déduite mesurée à l'étape a2.

5. Procédé selon l'une ou plusieurs des revendications précédentes, **caractérisé en ce qu'**il comprend une étape f. consistant à mesurer une arête de coupe (40) de l'outil de coupe (4) obtenue au moyen d'un système de vision bidimensionnelle à optique télécentrique (10).

6. Appareil pour inciser (1) des lignes d'affaiblissement sur des matériaux souples destinés à former des couvercles d'airbag, comprenant :
un bâti de machine (2),
un bras robotique (3) monté sur le bâti (2),
un outil de coupe (4) monté sur le bras robotique (3),
**caractérisé en ce que**
l'appareil (1) comprend en outre un premier raccord ou support (5) pour le matériau souple monté sur le bâti (2), des dispositifs de marquage optique (21, 41, 51) associés au bâti de machine (2), à l'outil de coupe (4) et au raccord ou support (5), respectivement, et un dispositif de vision (7) pour détecter une position spatiale desdits dispositifs de marquage optique (21, 41, 51).

7. Appareil selon la revendication précédente, **caractérisé en ce que** le dispositif de vision (7) comprend au moins une, de préférence deux caméras (71, 72) montées sur le bâti (2).

8. Appareil selon la revendication 6 ou 7, **caractérisé en ce que** l'outil de coupe (4) comprend une arête de coupe (40) et un support pour l'arête de coupe (42) et dans lequel l'appareil (1) comprend un dispositif de palpage (8) monté sur l'outil de coupe (4), de préférence sur ledit support pour l'arête de coupe (42).

9. Appareil selon l'une ou plusieurs des revendications de 6 à 8, **caractérisé en ce qu'**il comprend un système de vision bidimensionnelle (10) à optique télécentrique pour mesurer une arête de coupe (40) de l'outil de coupe (4).

10. Appareil selon l'une ou plusieurs des revendications 6 à 8, **caractérisé en ce qu'**il comprend en outre un deuxième raccord ou support (50) pour le matériau souple monté sur le bâti (2), ledit dispositif de vision (7) étant monté mobile sur le bâti entre une première position dans laquelle il encadre au moins le premier raccord ou support (5) et une deuxième position dans laquelle il encadre au moins le deuxième raccord ou support (5).
